# EUROPÄISCHE PATENTSCHRIFT

(11) **EP 2 183 951 B1**
(45) Veröffentlichungstag und Bekanntmachung des Hinweises auf die Patenterteilung: **27.04.2011**
(21) Anmeldenummer: 09013942.9
(22) Anmeldetag: 06.11.2009
(51) Int. Cl.: A01C 5/06

(54) **Säschar, Scharspitze und Einzelkornsämaschine**
Seed drill coulter, coulter point and single grain seeder
Soc de semoir, pointe de soc et semoir monograine

(30) Priorität: 08.11.2008 DE 102008056535
(43) Veröffentlichungstag der Anmeldung: 12.05.2010
(73) Patentinhaber: Kverneland ASA, 4355 Kvernaland (NO)
(72) Erfinder: Beier, Carsten, 33154 Salzkotten (DE)
(74) Vertreter: Schweiger, Johannes

(56) Entgegenhaltungen:
- EP-A1- 0 898 860
- DE-A1- 2 001 061
- DE-U1- 8 806 001
- US-A- 5 370 070

## Beschreibung

Die Erfindung betrifft ein Säschar nach Anspruch 1, eine Scharspitze nach Anspruch 13 und eine Einzelkornsämaschine nach Anspruch 12.

Bei bekannten pneumatischen Einzelkornsäaggregaten befindet sich unterhalb des Vereinzelungsorgans, beispielsweise eines Säherzes, ein Säschar, das eine Furche in den Ackerboden schneidet, in die dann das Saatgut einzeln und möglichst exakt abgelegt werden soll.

Bekannte Säschare für pneumatische Einzelkornsäaggregate bestehen in der Regel aus einer starkem Verschleiß unterliegenden Scharspitze, die meist in Seitenwände oder Bleche des Säschars eingenietet ist. Von der korrekt geformten Scharspitze ist die Ablagequalität des teilweise sehr kleinen, pillierten oder nackten Saatgutes oder Düngers abhängig und je genauer die Ablage des teilweise sehr teuren Saatgutes erfolgt, desto bessere Ernteergebnisse sind möglich.

Bei bekannten Säscharen ist ein Austauschen der Scharspitze mit einem erheblichen Aufwand verbunden, da die Befestigungsmittel für die Scharspitzen entweder schlecht erreichbar oder verschmutzt sind oder in sonstiger Weise eine Montage erschweren, wie beispielsweise bei genieteten Scharspitzen.

Die DE 88 06 001 U1 offenbart ein Säschar für eine Sämaschine, die an einer Tragekonstruktion einer Sämaschine befestigt ist, mit einer an dem Säschar-Körper angebrachten Säschar-Schneide.

Aufgabe der vorliegenden Erfindung ist es daher, ein Säschar mit einfach und flexibel austauschbarer Scharspitze vorzugeben, das möglichst mit unterschiedlichen Scharspitzenformen einsetzbar ist.

Diese Aufgabe wird mit einem Säschar mit den Merkmalen des Anspruchs 1, einer Scharspitze mit den Merkmalen des Anspruchs 13 sowie einer Einzelkornsämaschine mit den Merkmalen des Anspruchs 12 gelöst. Vorteilhafte Weiterbildungen der Erfindung sind in den Unteransprüchen angegeben. In den Rahmen der Erfindung fallen sämtliche Kombinationen aus zumindest zwei in der Beschreibung, den Ansprüchen und/oder den Figuren offenbarten Merkmalen.

Grundidee der vorliegenden Erfindung ist es, eine Scharspitze am Säschar derart zu befestigen, dass im beim Betrieb von Ackerboden beaufschlagten Arbeitsbereich des Säschars möglichst keine aus der Außenkontur des Säschars hervortretenden Befestigungs- und/oder Positioniermittel zur Fixierung der Scharspitze am Säschar heraustreten oder vorragen, so dass ein möglichst planes, mit geringstmöglicher Reibung im Ackerboden gleitendes Säschar vorgesehen ist.

Die Erfindung besteht also darin, Befestigungs- und/oder Positioniermittel für die Befestigung und/oder Positionierung der Scharspitze am Säschar so anzuordnen, dass einerseits ein einfacher Wechsel ermöglicht wird, indem die Befestigungsmittel von außen zugänglich sind, aber gleichzeitig nicht im Arbeitsbereich des Säschars angeordnet sind und andererseits Positioniermittel vorgesehen sind, die im Zusammenspiel mit den Befestigungsmitteln für eine stabile Halterung der Scharspitze im Säschar sorgen, insbesondere beim Betrieb des Säschars. Die Befestigungs- und/oder Positioniermittel können als, vorzugsweise rein, formschlüssige Verbindung ausgebildet sein.

Die Positioniermittel sind demnach mit Vorteil durch eine Lageröffnung der Scharspitze einerseits und ein korrespondierendes Gegenlager am Saatgutkanal andererseits gebildet. Somit weisen die Positioniermittel mindestens einen Freiheitsgrad, insbesondere genau zwei Freiheitsgrade auf.

Die Befestigungsmittel sind mit Vorteil durch eine Durchgangsöffnung der Scharspitze, eine korrespondierende Durchgangsöffnung am Säscharkörper und ein die Durchgangsöffnungen durchsetzbares Verbindungsmittel, insbesondere eine Schraube, gebildet. Somit weisen die Befestigungsmittel mindestens einen Freiheitsgrad, insbesondere genau einen Freiheitsgrad auf.

Als unmittelbarer Effekt ergibt sich daraus, dass die Montage der Scharspitze werkzeuglos erfolgen kann.

In einer vorteilhaften Ausgestaltung der Erfindung ist der Saatgutkanal durch zwei Seitenwände mit Querstreben gebildet, wodurch die Stabilität des Saatgutkanals verbessert wird.

Indem die Positioniermittel in Fahrtrichtung F hinter den Befestigungsmitteln angeordnet sind, wird auf Grund der Bauart der Scharspitze eine optimale Fixierung der Scharspitze am Säschar bei gleichzeitig einfacher Austauschbarkeit ermöglicht.

Soweit sich gemäß einer weiteren Ausführungsform der Erfindung die Positioniermittel zumindest teilweise in den Saatgutkanal erstrecken, vorzugsweise außerhalb einer Flugbahn des Saatguts im Saatgutkanal, oder einen Teil des Saatgutkanals bilden, insbesondere die in Fahrtrichtung F vordere Wand, wird einerseits der Saatgutkanal stabilisiert und andererseits ist die Realisierung einer planen Außenkontur insbesondere im Bereich des Übergangs zwischen Scharspitze und Seitenwänden des Saatgutkanals, möglich.

In einer weiteren vorteilhaften Ausführungsform der Erfindung sind die Positioniermittel und die Befestigungsmittel über einen gemeinsamen Arm verbunden, der sich, vorzugsweise gerade, von den Positioniermitteln zu den Befestigungsmitteln erstreckt. Durch den gemeinsamen Arm der Positionier- und Befestigungsmittel wird eine stabile Verbindung zwischen den Positionier- und Befestigungsmitteln geschaffen, durch die einerseits die Stabilität der Scharspitze und andererseits die Stabilität der Verbindung der Scharspitze mit dem Säschar verbessert wird.

In einer weiteren vorteilhaften Ausgestaltung der Erfindung ist vorgesehen, dass die Befestigungsmittel zur gleichzeitigen Befestigung von Scharspitze und Saatgutkanal an einem Halter zur Halterung des Säschars vorgesehen sind, insbesondere durch eine einzige Schrauben-Mutter-Verbindung, vorzugsweise quer zur Fahrtrichtung F. Durch diese Maßnahme werden zusätzliche Befestigungsmittel überflüssig und das Säschar kann mit einem einzigen Befestigungsmittel montiert werden, wodurch die Montage vereinfacht wird.

Weiterhin ist vorgesehen, dass die Befestigungsmittel beim Betrieb des Säschars zumindest größtenteils auch außerhalb des Ackerbodens liegen, insbesondere die aus der Außenkontur des Säschars hervorstehenden Bauteile, wie beispielsweise die Befestigungsmittel, die von außen zugänglich sind, um die Montage zu vereinfachen.

Mit Vorteil ist weiterhin vorgesehen, dass äußere Seitenwände der Scharspitze mit den Seitenwänden des Saatgutkanals zumindest teilweise fluchtend ausgebildet sind. Hierdurch wird der Fahrtwiderstand des Säschars verringert und Verschleiß minimiert. Unschädlich ist es, wenn die Seitenwände des Saatgutkanals entgegen der Fahrrichtung F, also nach hinten, auseinander laufen. Der Übergang zwischen Scharspitze und den Seitenwänden des Saatgutkanals soll zumindest im Arbeitsbereich des Säschars plan ausgebildet sein.

Soweit der Arm entlang einer in Fahrtrichtung F vorne liegenden Vorderkante des Saatgutkanals zwischen den Seitenwänden des Saatgutkanals verläuft, wird durch den Arm eine höhere Stabilität des Saatgutkanals zumindest in einem vorderen Bereich des Saatgutkanals erreicht.

Indem an dem Arm in Fahrtrichtung F Furchenbildungsmittel angeformt sind oder alternativ der Arm und die Furchenbildungsmittel in einem Stück gefertigt sind, wird die Stabilität der gesamten Scharspitze weiter erhöht, zumal an der Scharspitze der größte Widerstand des Ackerbodens anliegt.

In einer weiteren vorteilhaften Ausgestaltung der Erfindung ist vorgesehen, dass die Seitenwände des Saatgutkanals, insbesondere bündig an einer Schulter des Arms anliegen. Hierdurch wird gleichzeitig eine fluchtende Ausgestaltung von Scharspitze und Säschar, insbesondere Seitenwänden des Saatgutkanals in einfacher und optimaler Weise verwirklicht.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1a und 1 b:: perspektivische Ansichten eines Einzelkornsäaggregats einer erfindungsgemäßen Einzelkornsämaschine von schräg hinten (Figur 1a) und von schräg vorne (Figur 1b),
- Figur 2a:: eine perspektivische Ansicht eines erfindungsgemäßen Säschars und
- Figur 2b:: eine Explosionsansicht des erfindungsgemäßen Säschars, teilweise aufgeschnitten.

In den Figuren sind gleiche Bauteile und Bauteile mit der gleichen Funktion mit den gleichen Bezugszeichen gekennzeichnet.

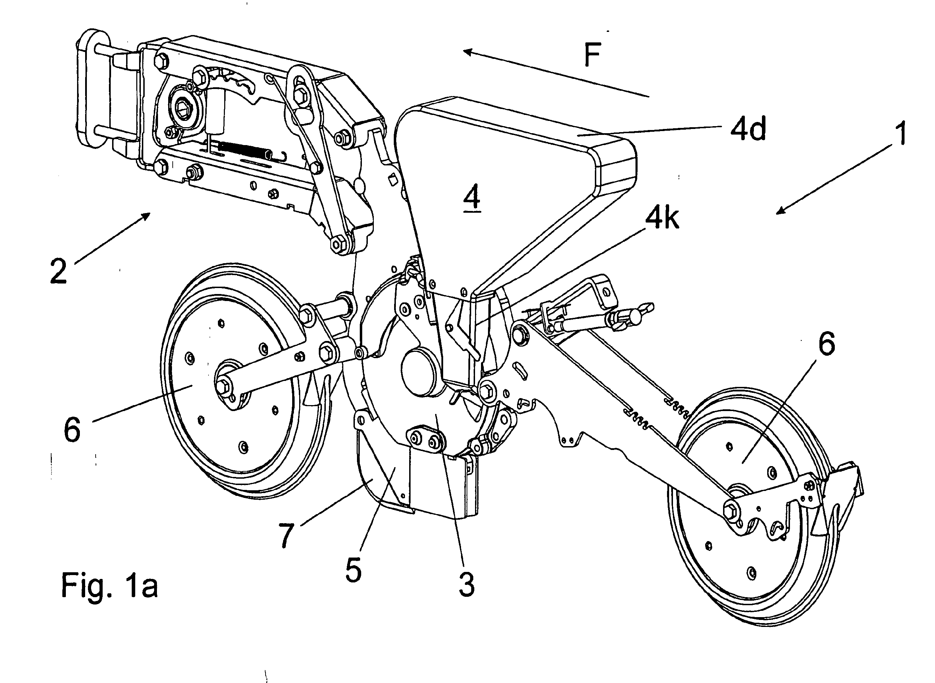

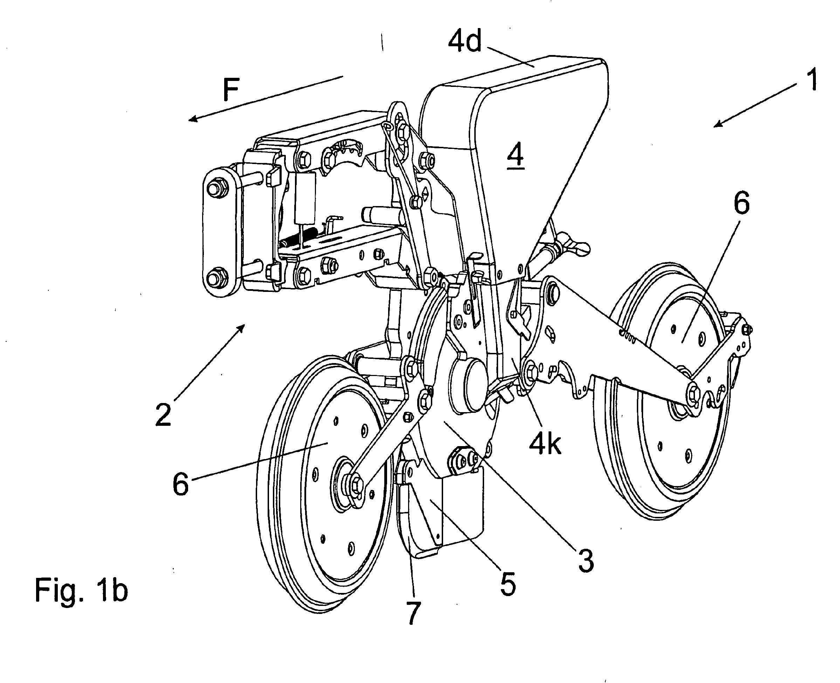

In Figuren 1a und 1b ist ein Säaggregat 1 einer erfindungsgemäßen Einzelkornsämaschine dargestellt, das über einen Arm 2 am Rahmen der Einzelkornsämaschine befestigt ist. Dementsprechend ist die Fahrtrichtung beim Betrieb der Einzelkornsämaschine in der durch Pfeil F angegebenen Richtung.

An dem Arm 2, der eine Schwenkbewegung, vorzugsweise als Vertikalbewegung durch Ausbildung des Arms 2 als Parallelogrammarm, zulässt, sind ein Säherz 3, ein oberhalb des Säherzes 3 angeordneter Tank 4, ein unterhalb des Säherzes 3 angeordnetes Säschar 5 sowie zwei in Fahrtrichtung F vor und hinter dem Säherz 3 angeordnete, gegenüber dem Säschar 5 schwenkbare Laufräder 6 angebracht.

Der Tank 4 ist über einen Deckel 4d verschließbar und mit Saatgut befüllbar, das wiederum über einen Kanal 4k seitlich in das Säherz 3 geführt wird.

Das Saatgut wird im Säherz 3 vereinzelt und über das Säschar 5 in eine durch eine Scharspitze 7 des Säschars 5 geöffnete Furche im Ackerboden abgelegt.

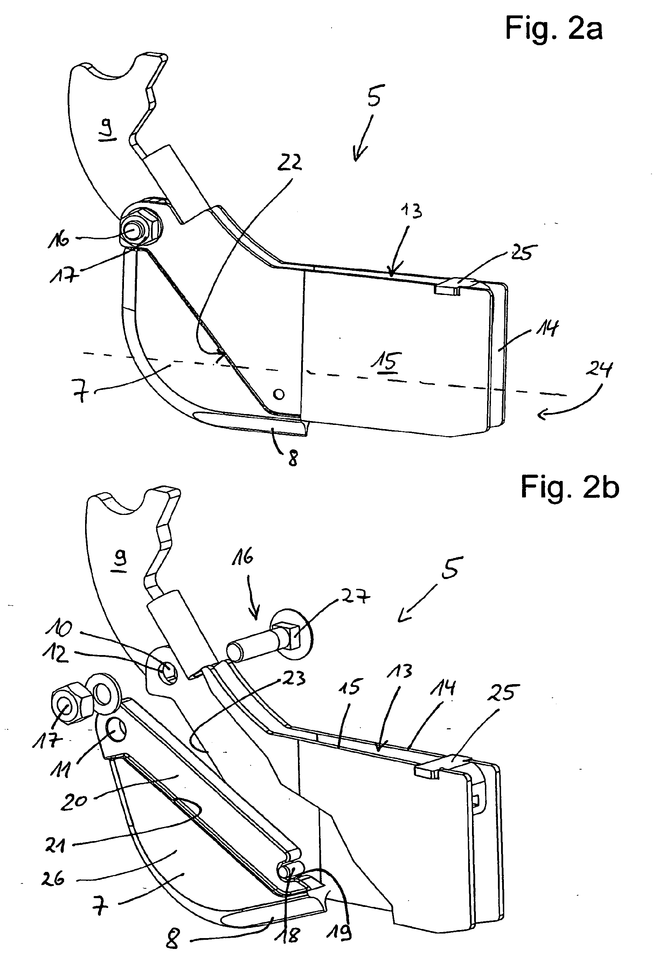

In Figuren 2a und 2b ist eine beispielhafte Ausführung des Säschars 5 mit der Scharspitze 7 gezeigt, deren Furchenspitze 8 zur Öffnung und Ausformung der Furche dient. Das Säschar 5 ist über einen Halter 9 an dem Säaggregat 1 befestigt oder befestigbar, wobei der Halter 9 auch Bestandteil des Säaggregats 1 sein kann und dann nicht zum Säherz 3 zählen würde.

Befestigungsmittel zur Befestigung des Säschars 5 am Halter 9 oder mit dem Halter 9 bestehen aus Durchgangsöffnungen 10, 11 und 12 des Halters 9, der Scharspitze 7 und von - einen Saatgutkanal 13 bildenden Seitenwänden 14, 15 sowie einer durch die Durchgangsöffnungen 10, 11 und 12 mit einer Mutter 17 zu einer Schrauben-Mutter-Verbindung montierbaren Schraube 16. Durch die vorgenannten Befestigungsmittel ist die Scharspitze 7 einfach austauschbar. Die Schraube 16 weist zur drehfesten Aufnahme eine Kodierung 27, hier in rechteckiger Form, auf.

Die Seitenwände 14, 15 werden über eine Querstrebe 18 verbunden, die gleichzeitig als Positioniermittel zusammen mit einer korrespondierenden Ausnehmung 19 eines Armes 20 dient. Die Montage der Scharspitze 7 am Säschar 5 erfolgt in der in Figur 2 dargestellten Weise, nämlich indem zunächst die Ausnehmung 19 auf die Querstrebe 18 geschoben wird, so dass gleichzeitig der Arm 20 zwischen die Seitenwände 14 und 15 des Saatgutkanals 13 gleitet. Sobald der Arm 20 mit Schultern 21 an korrespondierenden Stirnflächen 22, 23 der Seitenwände 14 und 15 anliegt, befinden sich die Durchgangsöffnungen 10, 11 und 12 automatisch in Flucht, so dass die Schraube 16 durch die Durchgangsöffnungen 10, 11 und 12 gesteckt werden kann und mit der Mutter 17 zu einer Fixierung der Scharspitze 7 an dem Säschar 5 führt, die jederzeit wieder über die Schrauben-Mutter-Verbindung gelöst werden kann.

Selbst nach langem Einsatz der Scharspitze 7 ist diese auf Grund der Tatsache, dass die Schrauben-Mutter-Verbindung außerhalb eines Arbeitsbereiches 24 angeordnet ist, und insofern nicht oder in vernachlässigbarer Weise vom Ackerboden verschlissen oder verschmutzt wird, ohne Probleme lösbar. Die Grenze des Arbeitsbereiches 24 ist durch Strichlinie in Figur 2a schematisch dargestellt, wobei diese nicht scharf zu ziehen ist.

Der in Fahrtrichtung F hinten befindliche Bereich des Saatgutkanals 13 wird durch einen Abstandhalter 25 stabilisiert.

Vom Säherz 3 vereinzeltes Saatgut wird oben in den Saatgutkanal 13 abgegeben und zwischen den Seitenwänden 14, 15 geführt in die durch die Furchenspitze 8 geöffnete Furche im Ackerboden abgelegt, wobei die Flugbahn des Saatgutes in etwa parallel zu dem Arm 20 verläuft, der eine plane Innenwand des Saatgutkanals 13 bildet. In Figur 2a ist außerdem zu erkennen, dass äußere Seitenwände 26 der Scharspitze 7 zumindest teilweise mit den Seitenwänden 14, 15 des Saatgutkanals 13 fluchten. Die Seitenwände 14, 15 laufen entgegen der Fahrtrichtung F, also nach hinten, auseinander, damit ein Verstopfen des Saatgutkanals 13 vermieden wird. Hierzu ist insbesondere auch der Abstandhalter 25 vorgesehen.

### Bezugszeichenliste

- F: Fahrtrichtung
- 1: Säaggregat
- 2: Arm
- 3: Säherz
- 4: Tank
- 4d: Deckel
- 4k: Kanal
- 5: Säschar
- 6: Laufräder
- 7: Scharspitze
- 8: Furchenspitze
- 9: Halter
- 10: Durchgangsöffnung
- 11: Durchgangsöffnung
- 12: Durchgangsöffnung
- 13: Saatgutkanal
- 14: Seitenwand
- 15: Seitenwand
- 16: Schraube
- 17: Mutter
- 18: Querstrebe
- 19: Ausnehmung
- 20: Arm
- 21: Schulter
- 22: Stirnfläche
- 23: Stirnfläche
- 24: Arbeitsbereich
- 25: Abstandhalter
- 26: äußere Seitenwände
- 27: Kodierung

## Patentansprüche

1. Säschar (5) zur Einbringung von Saatgut in eine Furche im Ackerboden mit folgenden Merkmalen:
- einem Saatgutkanal (13) zum Leiten des Saatguts in die Furche,
- eine in einer Fahrtrichtung (F) des Säschars (5) vor dem Saatgutkanal (13) befestigbaren Scharspitze (7) zur Ausformung der Furche,
**dadurch gekennzeichnet, dass**
in einem oberen, von der Furche entfernten Abschnitt der Scharspitze (7) Befestigungsmittel (10, 11, 12, 16, 17) zur Fixierung der Scharspitze (7) und in einem unterhalb der Befestigungsmittel (10, 11, 12, 16, 17) angeordneten Bereich Positioniermittel (18, 19) zur gelenkigen und/oder losen Lagerung der Scharspitze (7) vorgesehen sind, wobei die Befestigungsmittel (10, 11, 12, 16, 17) zur gleichzeitigen Befestigung von Scharspitze (7) und Saatgutkanal (13) an einem Halter (9) zur Halterung des Säschars (5) vorgesehen sind.

2. Säschar (5) nach Anspruch 1, **dadurch gekennzeichnet, dass** der Saatgutkanal (13) durch zwei Seitenwände (14, 15) mit Querstreben (18) gebildet ist.

3. Säschar (5) nach einem der vorhergehenden Ansprüche
**dadurch gekennzeichnet,**
**dass** die Positioniermittel (18, 19) in Fahrtrichtung (F) hinter den Befestigungsmitteln (10, 11, 12, 16, 17) angeordnet sind.

4. Säschar (5) nach einem der vorhergehenden Ansprüche,
**dadurch gekennzeichnet,**
**dass** die Positioniermittel (18, 19) sich zumindest teilweise in den Saatgutkanal (13) erstrecken, vorzugsweise außerhalb einer Flugbahn des Saatguts im Saatgutkanal (13), oder einen Teil des Saatgutkanals (13) bilden, insbesondere dessen in Fahrtrichtung F vordere Innenwand.

5. Säschar (5) nach einem der vorhergehenden Ansprüche,
**dadurch gekennzeichnet,**
**dass** die Positioniermittel (18, 19) und die Befestigungsmittel (10, 11, 12, 16, 17) über einen gemeinsamen Arm (20) verbunden sind, der sich, vorzugsweise gerade, von den Positioniermitteln (18, 19) zu den Befestigungsmitteln (10, 11, 12, 16, 17) erstreckt.

6. Säschar nach einem der vorhergehenden Ansprüche,
**dadurch gekennzeichnet,**
**dass** die Befestigungsmittel (10, 11, 12, 16, 17) zur gleichzeitigen Befestigung von Scharspitze (7) und Saatgutkanal (13) an einem Halter (9) zur Halterung des Säschars (5) vorgesehen sind, und zwar durch eine einzige Schrauben-Mutter-Verbindung, vorzugsweise quer zur Fahrtrichtung (F).

7. Säschar (5) nach einem der vorhergehenden Ansprüche,
**dadurch gekennzeichnet,**
**dass** die Befestigungsmittel (10, 11, 12, 16, 17) beim Betrieb des Säschars (5) zumindest größtenteils außerhalb des Ackerbodens liegen, insbesondere die aus der Außenkontur des Säschars (5) hervorstehenden Bauteile.

8. Säschar (5) nach einem der vorhergehenden Ansprüche,
**dadurch gekennzeichnet,**
**dass** äußere Seitenwände (26) der Scharspitze (7) mit den Seitenwänden (14, 15) des Saatgutkanals (13) zumindest teilweise fluchtend ausgebildet sind.

9. Säschar (5) nach Anspruch 5,
**dadurch gekennzeichnet,**
**dass** der Arm (20) entlang von in Fahrtrichtung (F) vorne liegenden Stirnflächen (22, 23) des Saatgutkanals (13) zwischen den Seitenwänden (14, 15) des Saatgutkanals (13) verläuft.

10. Säschar (5) nach Anspruch 5,
**dadurch gekennzeichnet,**
**dass** an dem Arm (20) in Fahrrichtung (F) Furchenbildungsmittel, insbesondere eine Furchenspitze (8), angeformt sind.

11. Säschar (5) nach einem der vorhergehenden Ansprüche,
**dadurch gekennzeichnet,**
**dass** die Seitenwände (14, 15) des Saatgutkanals (13), insbesondere bündig, vorzugsweise beidseitig, an einer Schulter (21) des Arms (20) anliegen.

12. Einzelkornsämaschine mit mindestens einem Säschar (5) nach einem der vorhergehenden Ansprüche.

13. Scharspitze für ein Säschar (5) nach einem der vorhergehenden Ansprüche zur Ausformung einer Furche, wobei in einem oberen, von der Furche entfernten Abschnitt der Scharspitze (7) Befestigungsmittel (11) zur Fixierung der Scharspitze (7) und in einem unterhalb der Befestigungsmittel (11) angeordneten Bereich Positioniermittel (19) zur gelenkigen und/oder losen Lagerung der Scharspitze (7) vorgesehen sind.

## Claims

1. Coulter (5) for introducing seed into a furrow in soil with the following features:
- a seed channel (13) for routing the seed into the furrow,
- a share tip (7) which can be attached in the direction of travel (F) of the coulter (5) in front of the seed channel (13) for forming the furrow,
**characterized in that**
in an upper section of the share tip (7) away from the furrow there are fasteners (10, 11, 12, 16, 17) for fixing the share tip (7) and in a region located underneath the fasteners (10, 11, 12, 16, 17) there are positioning means (18, 19) for articulated and/or loose support of the share tip (7), the fasteners (10, 11, 12, 16, 17) being designed for simultaneous attachment of the share tip (7) and seed channel (13) to a holder (9) for holding the coulter (5).

2. Coulter (5) as claimed in Claim 1, wherein the seed channel (13) is formed by two side walls (14, 15) with cross braces (18).

3. Coulter (5) as claimed in one of the preceding claims, wherein the positioning means (18, 19) are located in the direction of travel (F) behind the fasteners (10, 11, 12, 16, 17).

4. Coulter (5) as claimed in one of the preceding claims, wherein the positioning means (18, 19) extend at least partially into the seed channel (13), preferably outside a trajectory of the seed in the seed channel (13), or form part of the seed channel (13), especially its inner wall which is the front wall in the direction of travel F.

5. Coulter (5) as claimed in one of the preceding claims, wherein the positioning means (18, 19) and the fasteners (10, 11, 12, 16, 17) are connected via a common arm (20) which extends preferably straight from the positioning means (18, 19) to the fasteners (10, 11, 12, 16, 17).

6. Coulter (5) as claimed in one of the preceding claims, wherein the fasteners (10, 11, 12, 16, 17) are designed for simultaneous fastening of the share tip (7) and seed channel (13) to a holder (9) for holding the coulter (5), specifically by a single bolt-nut connection, preferably transversely to the direction of travel (F).

7. Coulter (5) as claimed in one of the preceding claims, wherein the fasteners (10, 11, 12, 16, 17) during operation of the coulter (5) lie at least for the most part outside of the soil, especially the components which project out of the outer contour of the coulter (5).

8. Coulter (5) as claimed in one of the preceding claims, wherein the outer side walls (26) of the share tip (7) are made at least partially flush with the side walls (14, 15) of the seed channel (13).

9. Coulter (5) as claimed in Claim 5, wherein the arm (20) runs along end surfaces (22, 23) of the seed channel (13) which are forward in the direction of travel (F) between the side walls (14, 15) of the seed channel (13).

10. Coulter (5) as claimed in Claim 5, wherein furrow-forming means, especially a furrow tip (8), are molded on the arm (20) in the direction of travel (F).

11. Coulter (5) as claimed in one of the preceding claims, wherein the side walls (14, 15) of the seed channel (13) adjoin, especially flush, preferably on both sides, one shoulder (21) of the arm (20).

12. Single-seed drill with at least one coulter (5) as claimed in one of the preceding claims.

13. Share tip for a coulter (5) as claimed in one of the preceding claims for forming a furrow, in an upper section of the share tip (7) away from the furrow there being fasteners (11) for fixing the share tip (7) and in a region located underneath the fasteners (11) there being positioning means (19) for articulated and/or loose support of the share tip (7).

## Revendications

1. Soc semoir (5) pour l'introduction de semence dans un sillon dans le sol de labour présentant les caractéristiques suivantes :
- un conduit à semence (13) pour l'acheminement de la semence dans le sillon,
- une pointe de soc (7) pouvant être fixée dans un sens de marche (F) du soc semoir (5) en amont du conduit à semence (13) et destinée à former le sillon,
**caractérisé en ce que**
des moyens de fixation (10, 11, 12, 16, 17) pour la fixation de la pointe de soc (7) sont prévus dans une partie supérieure, éloignée du sillon, de la pointe de son (7) et des moyens de positionnement (18, 19) pour le logement articulé et/ou libre de la pointe de soc (7) sont prévus dans une zone disposée au-dessous des moyens de fixation (10, 11, 12, 16, 17), les moyens de fixation (10, 11, 12, 16, 17) étant prévus pour la fixation simultanée de la pointe de soc (7) et du conduit à semence (13) sur un support (9) pour la fixation du soc semoir (5).

2. Soc semoir (5) selon la revendication 1, **caractérisé en ce que** le conduit à semence (13) est formé par deux parois latérales (14, 15) dotées de montants transversaux (18).

3. Soc semoir (5) selon l'une quelconque des revendications précédentes,
**caractérisé en ce que**
les moyens de positionnement (18, 19) sont disposés, vus dans le sens de marche (F), derrière les moyens de fixation (10, 11, 12, 16, 17).

4. Soc semoir (5) selon l'une quelconque des revendications précédentes,
**caractérisé en ce que**
les moyens de positionnement (18, 19) s'étendent au moins partiellement dans le conduit à semence (13), de préférence à l'extérieur d'une trajectoire de la semence dans le conduit à semence (13), ou forment une partie du conduit à semence (13), en particulier sa paroi intérieure avant dans le sens de marche F.

5. Soc semoir (5) selon l'une quelconque des revendications précédentes,
**caractérisé en ce que**
les moyens de positionnement (18, 19) et les moyens de fixation (10, 11, 12, 16, 17) sont reliés au moyen d'un bras (20) commun, qui s'étend, de préférence en ligne droite, depuis les moyens de positionnement (18, 19) vers les moyens de fixation (10, 11, 12, 16, 17).

6. Soc semoir selon l'une quelconque des revendications précédentes,
**caractérisé en ce que**
les moyens de fixation (10, 11, 12, 16, 17) sont prévus pour la fixation simultanée de la pointe de soc (7) et du conduit à semence (13) sur un support (9) pour la fixation du soc semoir (5), et ce par une unique liaison vis-écrou, de préférence transversalement au sens de marche (F).

7. Soc semoir (5) selon l'une quelconque des revendications précédentes,
**caractérisé en ce que**
les moyens de fixation (10, 11, 12, 16, 17) sont situés, lors du fonctionnement du soc semoir (5), au moins en majeure partie à l'extérieur du sol de labour, en particulier les composants dépassant du contour extérieur du soc semoir (5).

8. Soc semoir (5) selon l'une quelconque des revendications précédentes,
**caractérisé en ce que**
des parois latérales extérieures (26) de la pointe de soc (7) sont conçues au moins partiellement en alignement avec les parois latérales (14, 15) du conduit à semence (13).

9. Soc semoir (5) selon la revendication 5,
**caractérisé en ce que**
le bras (20) est agencé le long de surfaces frontales (22, 23), situées à l'avant dans le sens de marche (F), du conduit à semence (13) entre les parois latérales (14, 15) du conduit à semence (13).

10. Soc semoir (5) selon la revendication 5,
**caractérisé en ce que**
des moyens de formation de sillon, en particulier une pointe de sillon (8), sont formés sur le bras (20) dans le sens de marche (F).

11. Soc semoir (5) selon l'une quelconque des revendications précédentes
**caractérisé en ce que**
les parois latérales (14, 15) du conduit à semence (13) s'appliquent, en particulier à fleur, de préférence des deux côtés, sur un épaulement (21) du bras (20).

12. Semeuse monograine comprenant au moins un soc semoir (5) selon l'une quelconque des revendications précédentes.

13. Pointe de soc pour un soc semoir (5) selon l'une quelconque des revendications précédentes pour la formation d'un sillon, des moyens de fixation (11) pour la fixation de la pointe de soc (7) étant prévus dans une partie supérieure, éloignée du sillon, de la pointe de soc (7) et des moyens de positionnement (19) pour le logement articulé et/ou libre de la pointe de soc (7) étant prévus dans une zone disposée au-dessous des moyens de fixation (11).
